(19)

Europäisches Patentamt
European Patent Office
Office européen des brevets

(11) **EP 1 936 834 A2**

(12) **EUROPEAN PATENT APPLICATION**

(43) Date of publication:
**25.06.2008 Bulletin 2008/26**

(51) Int Cl.:
**H04B 7/185** *(2006.01)*

(21) Application number: **07023768.0**

(22) Date of filing: **07.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **18.12.2006 US 611944**

(71) Applicant: **HARRIS CORPORATION**
**Melbourne FL 32919 (US)**

(72) Inventors:
• **Beadle, Edward R.**
  **Melbourne**
  **FL 32940 (US)**
• **Dishman, John F.**
  **Melbourne**
  **FL 32940 (US)**

(74) Representative: **Schmidt, Steffen J.**
**Wuesthoff & Wuesthoff**
**Patent- und Rechtsanwälte**
**Schweigerstrasse 2**
**81541 München (DE)**

(54) **Knowledge-aided CFAR threshold adjustment for signal tracking**

(57)    A constant false alarm rate (CFAR) filter for a communication system receiver, that is subject to relative motion with respect to a transmitter, includes a knowledge-aided CFAR controller. The knowledge-based CFAR controller adaptively adjusts the filter's CFAR threshold to a value that is effective to mask, as false alarms, selected received signals associated with operating conditions where signal detection is expected or known to be difficult or effectively impossible, so as to prevent such false alarms from being coupled to a post CFAR filter signal processor.

FIG. 1
(PRIOR ART)

EP 1 936 834 A2

**Description**

The present invention relates in general to communication systems and subsystems thereof, wherein either the transmitter terminal and/or receiver terminal may be a mobile platform, with possibly high dynamic motion and possibly non-zero and/or non-constant acceleration between the transmitter terminal and the receiver terminal, such as, but not limited to the satellite communication system disclosed in the above-referenced '868 application. The present invention is particularly directed to the installation of a'knowledge'-aided constant false alarm rate (CFAR) threshold scaling function enhancement to the CFAR filter of the type disclosed in the above-referenced '441 application at the front end of the receiver terminal, so as to improve the receiver terminal's ability to perform time recovery and frequency recovery of a time and frequency hopped data signal, and thereby enable the receiver to properly demodulate the received signal.

Successful operation of a communication system requires time and frequency synchronization between the transmitter and receiver. In order to maximize the availability of link resources for the transport of information, it is desirable that link resources used for synchronization be minimized. In a system wherein there is relative motion between the transmitter and receiver, such as in a satellite or airborne communication system, cell phone system, and the like, this problem becomes more complex, due to kinematic parameters associated with motion, particularly, acceleration by either or both of the transmitter or receiver.

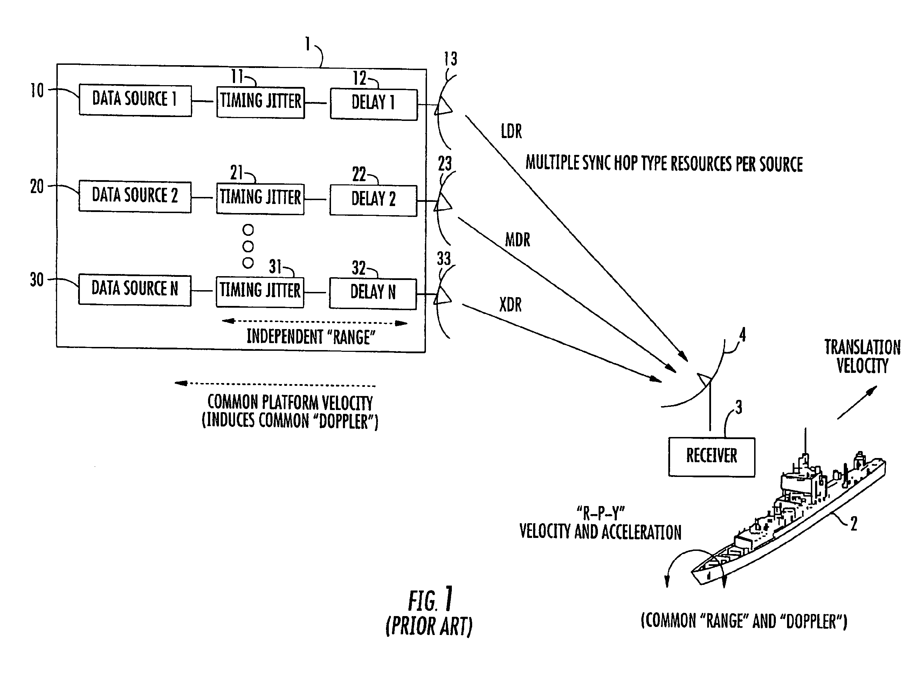

Figure 1 diagrammatically illustrates a non-limiting, reduced complexity, example of a satellite communication (SATCOM) system of the type described in the above-referenced '868 application, that is subject to such kinematic influences. As shown therein, the system includes a satellite 1, which serves as a platform for a transmitter terminal containing one or more data sources, that transmit to a receiver terminal 3, mounted on a (terrestrial) platform 2, such as a ship, which is dynamic. In the illustrated example, satellite 1 is shown as containing a plurality (e.g., three) respectively different data rate sources 10, 20 and 30, which will be referred to individually as L, M, and X. Because these sources are supported by a common transmit platform (satellite 1), movement of the satellite will introduce a substantially common range (timing) error, as well as a common velocity (frequency) error, into each source's forward link signal.

There are somewhat independent payload timing errors/jitters 11, 21, 31 and delays or offsets 12, 22 and 33 between the L, M, and X signals, as they are processed in slightly different manners prior to arriving at their transmit antennas 13, 23 and 33. All of the transmit signals (L, M and X) undergo a common Doppler shift, which is governed by the motion of the satellite 1 relative to the receive terminal 3 on the ship 2 which, as noted above, is dynamic. The Doppler shift for the individual L, M, and X signals is dependent on the transmitter hop frequency for each signal and the relative line-of-sight (LOS) velocity between the transmitter and receiver platforms.

As a result, for frequency-hopped signals, the signals will appear to have time-varying Doppler, which significantly complicates timing and frequency acquisition using conventional phase locked loop (PLL)-based designs. Further, where there is acceleration along the LOS (which occurs in the ship-borne receiver environment of the system shown in Figure 1), high order PLLs must be used. Unfortunately, high-order PLLs have limited utility in practical systems due to difficulty in design and stabilization.

In order to receive and recover data communication signals from the satellite downlink, it is necessary that the receiver terminal have some a priori knowledge of the downlink signal it is to acquire. The receiver terminal is typically provided with nominal knowledge of the timing and transmit frequency of a synchronization pulse for a given remote data source, by some ancillary facility and knowledge of the pre-planned time/frequency hopping patterns (e.g., TRANSEC). Knowing the time and frequency hopping plan for each transmit source allows the receiver terminal to nominally know when, and at what frequency, to look for synchronization hops, which are the resource exploited by the receiver terminal to make time and frequency error measurements, and adjust the receiver terminal's time and frequency control, per transmitted communication signal, so that data may be recovered. In a typical application, a set of synchronization hops per signal may be reserved in the link. In the three transmitter source example of Figure 1, there would be three sets of synchronization hops (i.e. coarse, fine and extra-fine) defined per signal source (i.e. the L, M, and X data sources 10, 20 and 30, respectively).

For satellite downlink systems, the orbital path of the satellite is governed by well-known physics, which allows the receiver terminal's associated antenna positioning subsystem to effectively continuously maintain the boresight of the receiver terminal antenna pointed at the satellite. Given knowledge of the direction of the incoming signal, a pseudo-range maintained in the receiver terminal is able to provide a data for locating or determining the range to the transmitter. Pseudo range may be derived from initial nominal range knowledge available from an ancillary source, and is continually updated with range error measurements derived from time error measurements made from synchronization resources.

The receiver terminal must also account for relative LOS motion between itself and the (assumed at rest (geosynchronous) satellite, especially where the receiver terminal is mounted on a dynamic platform, such as a ship. The relative LOS motion manifests itself as time and frequency errors in the downlink signal that is to be tracked. To account for this motion, the receiver terminal may be supplied with a number of communication and position/motion parameters associated with the satellite and/or the receiver terminal itself (e.g., shipboard navigation data), that are intended to enable the receiver terminal to make timing and frequency corrections, so that a respective downlink signal may be demodulated and data recovered. However, using a ship's navigation system to compute corrections that compensate for the range (timing) and velocity (frequency) errors in the downlink signal induced by the movement of the ship has shortcomings, including the potential absolute and time-varying latency in receiving the ship's navigation data. In addition, the use of global positioning system (GPS) data would be inadequate, since data for time and frequency corrections must be exceedingly accurate, especially if the data source to be tracked has a relatively high data rate, not to mention the negative impact on receiver complexity.

In a satellite downlink communication system, synchronization hops for each source will arrive at the receiver terminal at a rate that is dependent on the source type and in a non-periodic manner. For example, in the illustrated system, synchronization hops transmitted by L source 10 may arrive at an average rate that is a multiple of those of M source 20, and the inter-pulse arrival times of the L, M, and X streams, respectively, may be non-constant due to time-hopping. As pointed out above, PLL-based mechanisms for deriving timing and frequency information used for demodulation cannot readily accommodate such measurement sequence variations and will fail when applied to time and frequency hopped sync signals, particularly in environments subject to kinematic influences that include acceleration.

Although prior art literature has suggested that Kalman filters may be used in the track state of a communication link, none has addressed the relationship between communication synchronization parameters (time and frequency offsets) and kinematic variables, which is the basic problem in a satellite downlink environment, where time difference and range change rate are unknown. In addition to PLL-based proposals and limited use Kalman filter methodologies, other, non-linear, 'Kalman-like' techniques, containing banks of matched non-linear filters - one for each possible frequency (that are highly stylized and matched to individual problems) - have been proposed. However, such schemes will not work in practice for the time and frequency acquisition and tracking problem encountered in a dynamic communication system of the type described above, as their hardware implementations would occupy an unacceptable amount of semiconductor real estate to fit within a few ASICs, and would consume an extraordinary amount of power. Moreover, if implemented digitally, their associated processors could not process data fast enough to realize a viable solution for data rates of practical interest.

These and other drawbacks of conventional time and frequency recovery and tracking approaches for a system environment subject to kinematic (including acceleration) inputs are successfully remedied by the time/frequency tracker (TFT) module disclosed in the above-referenced '868 application, which employs a Kalman filter, functional parameters of which are derived in accordance with receiver terminal-associated kinematic measurements. These kinematic measurements include range and velocity measurements derived from timing and frequency errors measured on selected synchronization hop resources, the times of transmission and frequencies of which are a-periodically, or pseudo randomly, hopped within one or more signals transmitted from the satellite. These timing and frequency error measurements, as well as acceleration measurements, are combined into kinematic data vectors, which are used to update a Kalman filter kinematic state vector. The Kalman filter kinematic state vector provides updated kinematic state (time/frequency) estimates to a kinematic state estimate processor, which uses the Kalman filter output data to adjust the sampling clock for the receiver terminal processor's associated analog-to-digital converter within the demodulator, to achieve demodulation and recovery of data with improved accuracy.

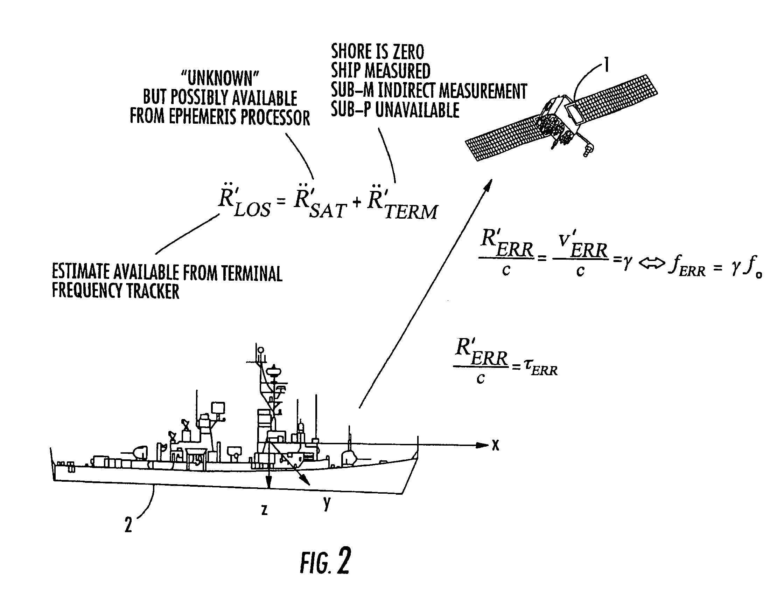

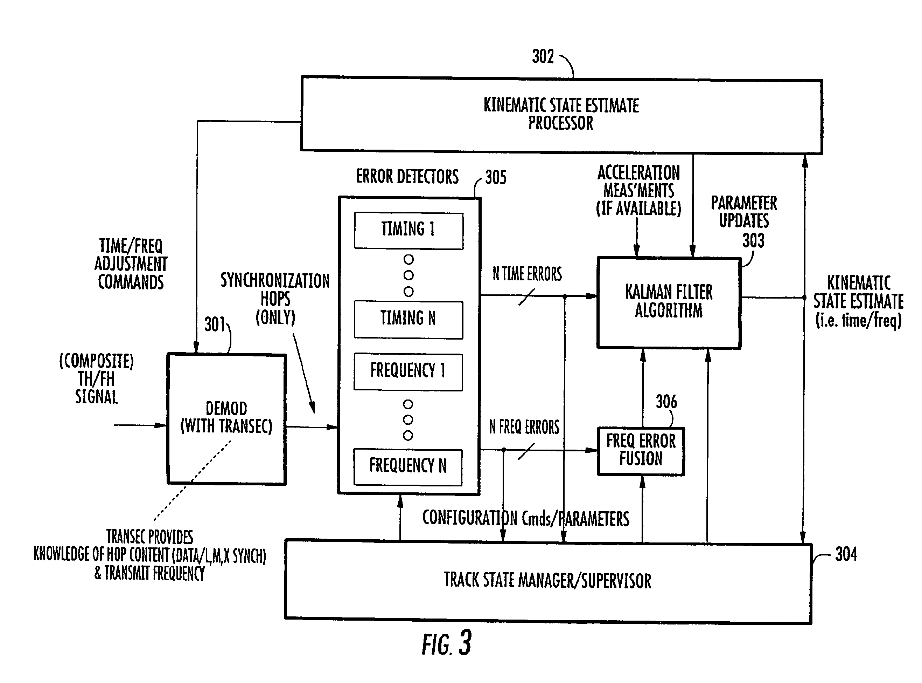

The manner in which these kinematic variables manifest themselves in the satellite communication system of Figure 1 is shown in Figure 2, and the exploited of such variables by the Kalman filter-based TFT module disclosed in the '868 application is diagrammatically illustrated in the functional block diagram of Figure 3. More particularly, Figure 2 shows satellite 1 as having some time varying downlink communication path (typically curved through the atmosphere) range $R'_{SAT}$ between the antenna of the receiver terminal on the ship 2 in a 'null reference' position and the transmit aperture. This range $R'_{SAT}$, although unknown, may be initially estimated by an ephemeris processor on board the ship 2.

There is an additional term, which is additive to the total LOS range $R'_{LOS}$, that is induced by the time varying motion of the receiver terminal, which causes a time varying range of $R'_{TERM}$. This motion is largely unknown directly, save for possibly the measurement of acceleration. The receiver platform (ship 2) employs a measurement subsystem (such as an accelerometer), that is coupled with the antenna and provides a measure of LOS acceleration - which is approximately equal to double derivative of the boresight range $R'_{LOS}$.

The frequency error measurements and timing error measurements used by the Kalman filter-based time and frequency tracker module disclosed in the '868 application are conducted with respect to a plurality of synchronization pulses per signal (with the error measurements being converted into kinematic equivalents), as well as a kinematic measurements associated with terminal motion. In this way, frequency errors will manifest themselves as velocity errors, which correspond to the error in the rate of change of range R', and time errors will manifest themselves as LOS range errors. The frequency error may be expressed as $f_{ERR} = \gamma f_0$ where, $f_0$ is the nominal transmit frequency and $\gamma$, which is associated with relative motion between the ship and the satellite, is the ratio of the current LOS velocity to the speed of light 'c'. Thus, frequency error can be used to derive a velocity measurement once the nominal transmit frequency is known. Figure 2 also shows range errors as scaled time errors, where the conversion is given by the speed of light 'c'.

Attention is now directed to Figure 3, which diagrammatically illustrates the overall architecture of the receiver terminal, including a front end demodulator and the Kalman filter-based time/frequency tracker (TFT) module disclosed in the '868 application. As shown therein, input signals from a satellite downlink-monitoring antenna, the front end of the receiver includes a programmable demodulator 301, which inputs signals from an associated low noise amplifier and downconverter subsystem (which may correspond to the antenna and associated receiver terminal mounted on the ship 2 of Figure 2) are supplied. The programmable demodulator 301 is supplied with nominal knowledge (i.e., TRANSEC) of the time and frequency hop patterns of the downlinked signals from a kinematic state estimate processor 302 and uses this information to adjust or refine the tuning of all sampling epochs and oscillators in the receiver terminal.

As detailed in the '868 application, the downlink signal may comprise a continuous stream (such as single frequency-hopped carrier) of multi timeslot data frames, selected sub-frames of which contain one or more synchronization hops, for which time and frequency measurements are available. For the purposes of Kalman filter update processing, the period defining 'simultaneity' is the pseudo sub-frame duration or Kalman update cycle. Synchronization hops, for which time and frequency measurements are available, are selectively inserted into the time slots of a data frame in a pseudo random manner. As pointed out above, in addition to relying upon timing and frequency errors, derived from the synchronization hops, the Kalman filter of the receiver terminal's time/frequency tracker (TFT) module relies upon kinematic data, such as that sourced from an accelerometer subsystem aligned with the boresight of the receiver terminal's antenna, which is continuously 'pointed' at the satellite, so that timing and frequency errors derived from the synchronization hops are more accurate.

Referring again to Figure 3, the kinematic state estimate processor 302 receives kinematic state estimates, as generated by a Kalman filter operator/algorithm 303. Kalman filter operator 303 has an architecture and coefficient update methodology that uses time and frequency errors derived from received time- and frequency-hopped synchronization pulses, in combination with accelerometer-sourced kinematic updates representative of motion inputs to the receiver terminal, and which produce perturbations in the times of arrival and frequencies of the hopped sync pulses, to produce time and frequency correction values. These time and frequency correction values are employed by the kinematic state estimate processor 302 to generate the time and frequency adjustment commands to the demodulator 301 for refining the frequency and times of transitions in its sampling clock.

Because its operation kinematic domain-based, the Kalman filter operator 303 enables the tracking processor to continuously track, with high accuracy, time and frequency variations in one or more hopped synchronization signals, that are conveyed within pseudo randomly occurring time slots of one or more forward link signals from the transmitter. The Kalman filter is thereby able to provide the basis for synchronization all timing epochs and frequencies needed to demodulate the received signals in a multi-user satellite communication system.

Configuration and operational characteristics of the Kalman filter operator 303 are established by configuration commands and parameters supplied by a (track state manager/supervisor) control processor 304, to enable the Kalman filter to operate with a prescribed of satellite-receiver terminal configuration. The track state manager 304 is also coupled to receive kinematic state estimates produced by Kalman filter operator 303. The track state manager 304 monitors these estimates to determine whether the performance of the Kalman filter operator 303 is acceptable. If the monitored estimates produced by the Kalman filter operator 303 indicate a performance level (kinematic state estimate error) that has departed from a prescribed application dependent tolerance, the track state manager processor 304 provides configuration adjustment commands (i.e. controls the state error covariance matrix, so as to increase the Kalman gain), as necessary, to bring the performance of the Kalman filter operator 303 back with acceptable levels.

A timing and frequency error detection subsystem 305 is coupled to receive data representative of the sampling of detected time- and frequency-hopped synchronization pulses from programmable demodulator 301. Time and frequency error detection subsystem 305 scales the errors to form kinematic measurements of range and velocity error. Range errors are scaled time errors, where the conversion is given by where the constant c is the speed of light. Velocity errors are scaled frequency errors. As with Kalman filter operator 303, configuration commands and operational parameters for the timing and frequency error detection subsystem 305, as well as those for a frequency error fusion operator 306, are provided by track state manager/supervisor 304.

The timing and frequency error detection subsystem 305 contains a plurality N of timing error detectors: Timing 1, ..., Timing N; and a plurality N of frequency error detectors: Frequency 1, ..., Frequency N. A respective timing error detector, Timing i, is associated with a particular data rate synchronization pulse, and is operative to conduct timing error measurements on a specified ith one of N synchronization pulses, with the value $\tau_{ERRi}$ of a timing error measurement for that sync hop pulse being coupled to the Kalman filter operator 303. Likewise, a respective frequency error detector, Frequency i, of the timing and frequency error detection subsystem 305, is operative to conduct frequency error measurements on a given ith one of N sync hop pulses, with the value $f_{ERRi}$ the frequency error measurement being coupled to the frequency error fusion operator 306.

Frequency error fusion operator 306 performs maximum likelihood (ML)-based fusion of frequency (velocity) measurement data, in order to exploit the availability, from multiple sensors (frequency error detectors 1-N), of information that represents the same types of measurements (e.g., Doppler). Kalman filter operator 303 accepts these measurements and converts the time and frequency errors into equivalent pseudo-range and pseudo-velocity. Between measurement cycles, the Kalman filter extrapolates pseudo-range, pseudo-velocity and acceleration state variables, so that, when measurement updates are available, the Kalman filter will update its estimates to the minimum mean square error (MMSE) optimum value.

Filter state variables of pseudo-range, pseudo-velocity, and acceleration are directly converted to timing and frequency error control signals, which are employed to update the demodulator 301, which then drives frequency and time errors to zero for each signal, to minimize bit error rate. Control signals are derived by using linear blending, as prescribed by Kalman filter equations, of measured state variables (i.e. pseudo-range, pseudo-velocity, and acceleration) and predicted measurements of state variables at a given time, and the current state estimate from the Kalman filter.

Now, although a communication system employing the Kalman filter-based time/frequency tracker (TFT) module of the '868 application is operative to successfully perform time and frequency acquisition and tracking in the presence of kinematic variations, it is potentially subject to false alarm detections, which may prevent the receiver from rapidly successfully acquiring and tracking the signals sourced from the satellite. Moreover, the signal inputs to the receiver antenna may include temporally based signal anomalies and/or spatially based signal anomalies.

As a non-limiting example, the receiver terminal's antenna may be mounted on a location of a dynamic platform, such as at the bow of a ship, that has an essentially clear view to the transmitter (satellite having some elevation and azimuth relative to the ship's heading). However, that view may change (and be subject to obscuration), for example, as a result of a change in the ship's heading, or a modification of the ship's superstructure adjacent to where the antenna is mounted. Similarly, a change in environmental conditions, such as a rain fade, may impact what the receiver terminal's antenna sees. In such circumstances, the ability of the receiver to detect a true sync pulse from the satellite can be impaired, so that what might otherwise appear to be the desired sync signal may be a false alarm and, if detected as a valid sync signal, would impair rapid acquisition and data recovery.

In accordance with the present invention, this problem is effectively circumvented by installing a 'knowledge'-aided CFAR threshold scaling function equipped CFAR filter at the front end of the receiver terminal. In accordance with a preferred embodiment, the knowledge-aided CFAR filter of the invention involves a scaling multiplier augmentation of the CFAR filter architecture disclosed in the above-referenced '441 application. Pursuant to this CFAR filter architecture, a scaling multiplier 'm' is used to modulate the noise power-based threshold of the CFAR detector, based upon one or more variables, such as space and time parameters, associated with known factors that may influence input signals to the receiver terminal's energy collection subsystem (antenna).

As a non-limiting example, the scaling function may comprise a visibility (to the satellite) obscuration-based multiplier function, that outputs a CFAR detector threshold scaling value based upon the receiver terminal's ability to receive downlinked energy from the satellite within a potential spatial field of view relative to the boresight of the receiver terminal's antenna. The ability of the receiver terminal's antenna to receive energy may be impacted by the presence of one or more obstructions, (such as components of a ship's superstructure in the antenna's potential field of view, or buildings in the path from a mobile (cell) phone to a base station tower), whose (x,y,z) spatial locations are known and whose influence on signals incident thereon has been measured.

Such a visibility obscuration-based function may comprise a two-dimensional (e.g., elevation (EL) and azimuth (AZ)) spatial map of quantized visibility values. In such a map, at (EL and AZ) spatial locations where antenna visibility to the satellite is unobscured, the value of the CFAR threshold multiplier may be set to unity, so that the CFAR threshold is not effectively modified. On the other hand, at a spatial location where antenna visibility to the transmitter (satellite) has been measured to be reduced (e.g., owing to the presence of a physical object, such as a ship's superstructure) the value of the CFAR threshold multiplier is set at some value substantially greater than unity.

The scaling multiplier will thus cause the resultant CFAR threshold to be increased to a value that is effective to require that energy of a potential sync pulse have a substantially larger value than in the case of an unobstructed view to the satellite. Namely, any signal received from the direction of an obstruction (which would effectively block or obscure a true sync signal from the satellite) will encounter an increased magnitude CFAR threshold that is effective to prevent such a (false alarm) signal from erroneously triggering a sync signal detection.

In addition to being impacted by the selective spatial effects of one or more obstructions located in its potential field of signal reception, the receiver terminal's antenna may be subjected to other signal degradation influences, such as a rain fade, which persists in an effectively ubiquitous manner for some period of time, and then dissipates. During such an event, it can be expected that signals downlinked from the satellite will be effectively blocked (by the rainstorm), so that any received energy that might otherwise appear to be that of a sync pulse from the satellite is probably a false alarm. To prevent such (false alarm) energy from being processed as a potential sync pulse, the value of the CFAR threshold multiplier is again increased, so that the resultant CFAR threshold has an elevated value that is effective to require that, in order to be considered as a potential sync pulse, energy of a received signal must be substantially greater than during generally 'clear' weather conditions.

Figure 1 diagrammatically illustrates a non-limiting, reduced complexity, example of a satellite communication (SATCOM) system of the type described in the above-referenced '868 application;

Figure 2 is a pictorial diagram illustrating kinematic variables in the satellite communication system of Figure 1;

Figure 3 diagrammatically illustrates the overall architecture of a satellite receiver terminal, including a front end demodulator and Kalman filter-based time/frequency tracker (TFT) module disclosed in the '868 application;

Figure 4 is a functional block diagram of the architecture of the CFAR filter disclosed in the above-referenced '441 application;

Figure 5 depicts the CFAR filter architecture of Figure 4 in terms of the signal processing functionalities of its respective components, and additionally shows a CFAR threshold scaling multiplier 'm' function of the present invention coupled between the noise power estimator and CFAR detector; and

Figure 6 is a non-limiting example of a two-dimensional (azimuth and elevation) spatial modulation map of quantized visibility obscuration-based CFAR threshold modulation values.

Before describing, in detail, the structure and operation of the 'knowledge'-aided CFAR threshold scaling function enhancement to the CFAR filter disclosed in the '441 application, it should be observed that the invention resides primarily in a prescribed arrangement of conventional communication signal processing circuits and components, and supervisory digital control circuitry that controls the operations of these signal processing circuits and components. Consequently, in the drawings, such circuits and components, and the manner in which they are interfaced with various communication equipments have, for the most part, been illustrated by readily understandable block diagrams, which show only those specific details that are pertinent to the present invention, so as not to obscure the disclosure with details which will be readily apparent to those skilled in the art having the benefit of the description herein. Thus, the block diagrams are primarily intended to show the respective functionalities and operational effects of the various components of the invention in convenient functional groupings, so that the present invention may be more readily understood.

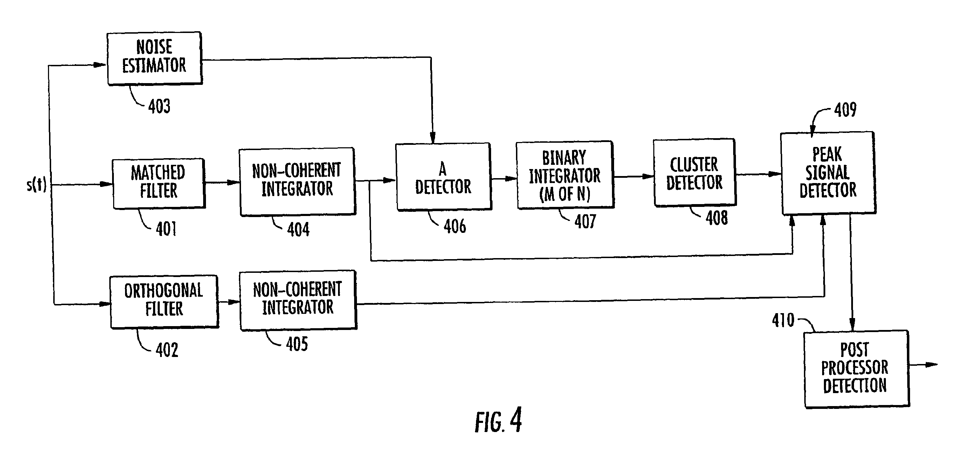

Attention is now directed to Figure 4, which is a functional block diagram of the architecture of the CFAR filter disclosed in the above-referenced '441 application, for which the present invention provides the above-described knowledge-aided CFAR threshold scaling function enhancement (to be described). The fundamental functionality of a CFAR filter is to reduce (optimally minimize) the probability of false alarms (PFA), while making the probability of detection (PD) of the desired signal as high as possible (maximizing PD). To this end, the CFAR filter employs a threshold, the value of which is based upon an estimation of noise in the signal reception environment, and which is used to exclude signals whose energy is less than a prescribed value.

More particularly, the input of the CFAR filter, to which an incoming (received) signal s(t) is applied from the receiver terminal's front end, is coupled in parallel to each of a (sync pulse shape-conforming) matched filter 401, an (inverse sync pulse shape-conforming) orthogonal filter 402 and a noise power estimator 403. In ideal (i.e., noiseless) cases, at the exact time that (sync pulse-) matched filter 401 provides a maximum output, orthogonal filter 402 provides a zero output. Orthogonal filter 402 thus provides a mechanism for determining the center and time-of-arrival of a received sync pulse. Detection of sync pulses is based upon the peak difference between the output signals of the respective filters 401 and 402, as carried out by a peak detector 409, to which the outputs of filters 401 and 402, as well as the output of a cluster detector 408, are coupled.

The output of matched filter 401 is coupled to an associated non-coherent integrator 404, while the output of orthogonal filter 402 is coupled to an associated non-coherent integrator 405. Each integrator derives a running summation of instantaneous power, so as to provide a discrete time equivalent of integration, and accumulating the total energy on a per time hypothesis basis within a prescribed pseudo-observation interval. The output of non-coherent integrator 404 is coupled to a CFAR detector 406. CFAR detector 406 is operative to determine whether the output of non-coherent integrator 404 constitutes signal plus noise, or noise only. CFAR detector 406 collects potential times-of-arrival of a plurality of sync pulse samples, and reduces the number of potential sync pulse detections by comparing the signal samples with a noise power only-based threshold; samples whose energy does not exceed the CFAR threshold are discarded. Thus, CFAR detector 406 is effective to suppress random noise events.

Deriving a measure of noise-only variance requires an estimation operation, which is typically carried out in the presence of the signal to be detected. To avoid performance degradation that can result from the influence of signals other than noise, noise power estimator 403 operates as an outlier detector, and effectively removes from the noise power estimation process any 'signal' plus noise samples that exceed a prescribed noise floor or threshold. The output of noise power estimator 403 is a CFAR threshold $\gamma_t$ that may be defined in equation (1) as follows:

[001]

$$\gamma_t = \sum_{i=1}^{N_p} (m_l + \frac{k_T(P_{FA})}{\sqrt{N_p}} \sigma_l) \hat{p}_i \quad (1)$$

(In equation (1), $k_T$ is computed from a polynomial; the CFAR threshold $\gamma t$ can be pre-computed and stored in a table of values.)

The output of CFAR detector 406 is coupled to a cascaded arrangement of a binary integrator 407 and cluster detector 408, which effectively perform sidelobe and data hop rejection. Binary integrator 407 is operative to remove additional random events, including any large interference pulse signal events, as well as data pulses, while cluster detector 408 determines whether the received input is 'too narrow' or 'too wide' to be a valid sync pulse. The output of cluster detector 408 is coupled to a peak detector 409, which is also coupled to receive the outputs of non-coherent integrators 404 and 405, as described above. Peak detector 409 is operative to locate the point where the signal difference between the integrated output of matched filter 401 and the integrated output of orthogonal filter 402 is maximum. The output of the peak detector 409, which ostensibly represents a valid sync pulse, constitutes the input to a downstream signal processor 410.

As pointed out above, the present invention involves installing a CFAR filter of the type disclosed in the '441 application (and shown in the functional block diagram of Figure 4) at the front end of the Kalman filter-based TFT module disclosed in the '868 application (shown in the functional block diagram of Figure 3). Such CFAR installation serves to block false alarm inputs that might otherwise reach and be processed by the TFT module, and thereby interfere with that module's ability to rapidly successfully acquiring and tracking the actual signals that are sourced from the satellite. As such, within the CFAR filter functional block diagram of Figure 4, signal processor 410 may be understood to correspond to the Kalman filter-based TFT module disclosed in the '868 application (shown in Figure 3). Therefore, the output of the peak detector 409 of the CFAR filter of Figure 4 is coupled to the input of the programmable demodulator 301 of the Kalman filter-based TFT module of Figure 3.

As a further feature of the invention, the value of the threshold employed by the CFAR filter to selectively exclude false alarms is adaptively adjusted, using knowledge of operational conditions, such as an obscuration of the transmitter that makes signal detection difficult or effectively impossible. This knowledge-aided adaptation of the CFAR threshold is readily implemented, by incorporating into the CFAR filter a 'knowledge'-aided CFAR threshold scaling or multiplier function that serves to improve the performance of the CFAR filter, by mitigating against certain types of false alarm inputs that can be effectively 'anticipated'.

For example, as pointed out above, the receiver terminal's antenna may be mounted on a location of a dynamic platform, such as at the bow of a ship, which is expected to have an essentially clear view to the transmitter (the satellite - having some elevation and azimuth relative to the ship's heading). However, that view may change (and thereby be subject to obscuration), for example - as a result of a change in the ship's heading, or a modification of the ship's superstructure adjacent to where the antenna is mounted. Similarly, a change in environmental conditions, such as a rainstorm, may impact what the antenna is able to see. In such circumstances, the ability of the receiver to detect a true sync pulse is expected to be impaired, either ubiquitously (as in the case of a rainstorm), or selectively, as in the case of the presence one or more obstructions in the field of view of the receiver terminal's antenna. Because such impairments necessarily interfere with the ability of the receiver terminal to see the satellite (when pointed in the direction of such impairments), it may be reasonably concluded that, in such conditions, what might otherwise appear to be the desired sync signal is probably a false alarm and should be ignored.

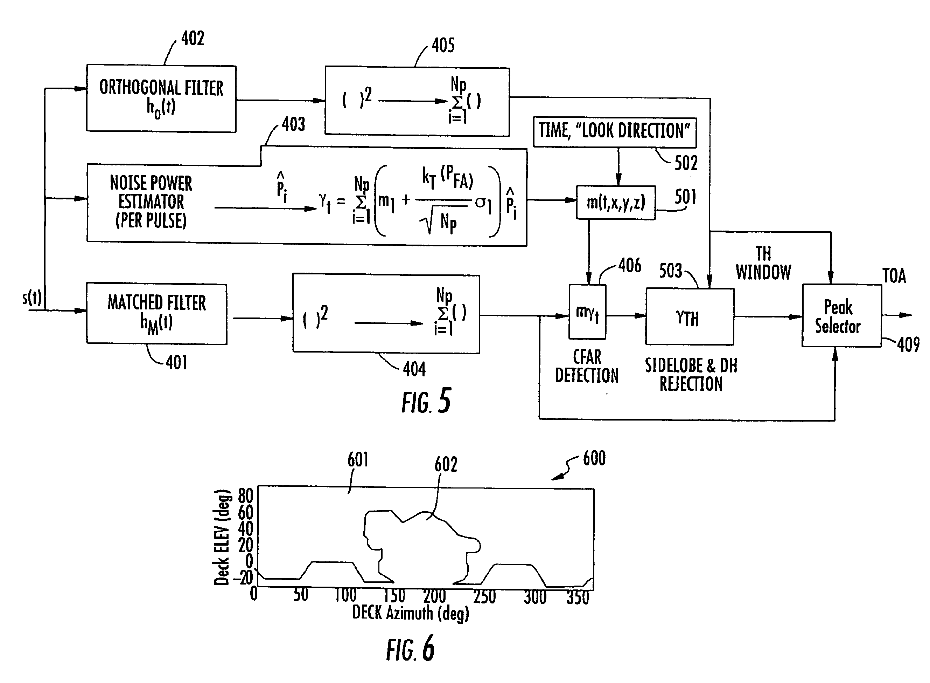

Pursuant to the present invention, this objective is successfully accomplished by upgrading the CFAR filter of Figure 4 to an enhanced CFAR filter architecture, shown in the functional block diagram of Figure 5, wherein a 'knowledge'-aided CFAR threshold scaling or multiplier function 'm' is incorporated into the signal processing path through the CFAR detector. More particularly, Figure 5 depicts the CFAR filter architecture of Figure 4 in terms of the signal processing functionalities of its respective components, and additionally shows a CFAR threshold scaling multiplier 'm' function 501 coupled between noise power estimator 403 and CFAR detector 406, and defined in accordance with known factors 502 that may influence input signals to the receiver terminal's energy collection subsystem (antenna). (Although shown as a multiple variable function (e.g., m(t,x,y,z) comprised of multiple space variables (x,y,z) and a time variable (t)), multiplier function 501 may comprise a plurality of functions, each of which is based upon one or more variables, such as, but not limited to, multifunction combination $m1(t)*m_2(x)*m_3(y)*m_4(z)$, without a loss in generality.) In fact the number of independent variables defining the obscuration map function m is limited only by the complexity the designer wishes to include. For example the suggested variable set of spatial variables (x,y,z) and time (t) could also be augmented with frequency (f). This is because some obstacles may be opaque at some frequencies and nearly transparent at others.

The CFAR threshold scaling multiplier function 501 is used to modulate (controllably increase) the noise power-based threshold $\gamma t$ of the CFAR detector, set forth in equation (1). Modulation of the CFAR threshold $\gamma t$ is performed in the CFAR detector 406 by multiplying the CFAR threshold $\gamma t$ produced by the noise power estimator 403 by the scaling multiplier function 501. The scaled CFAR threshold $m*\gamma t$ is then coupled to a random event (e.g., data hop (DH) and sidelobe rejection function 503 (comprised of the binary integrator 407 and cluster detector 408 of Figure 4), the output of which is coupled to peak detector 409.

As a non-limiting example, scaling multiplier function 501 may comprise a visibility (to the satellite) obscuration-based multiplier function 'm', that outputs a CFAR detector threshold scaling value based upon the receiver terminal's ability to see/receive downlinked energy from the satellite within a potential spatial field of view relative to the boresight of the receiver terminal's antenna. The ability of the receiver terminal's antenna to receive energy may be impacted by the presence of one or more obstructions, (such as components of a ship's superstructure in the antenna's potential field of view, or buildings in the path from a mobile (cell) phone to a base station tower), whose (x,y,z) spatial locations are known and whose influence on signals incident thereon has been measured.

Such a visibility obscuration-based function may comprise a two-dimensional (e.g., elevation (EL) and azimuth (AZ)) spatial modulation map of quantized visibility values. In such a map, a non-limiting, reduced complexity example of which is depicted at 600 in Figure 6, at (EL and AZ) spatial locations where antenna visibility to the satellite is unobscured, shown by the region 601, the value of the CFAR threshold multiplier may be set to unity, so that the CFAR threshold is not effectively modified. As a result, as long as the azimuth and elevation of the pointing direction of the receiver terminal's antenna lie within the (unobstructed) region 601, the value of the CFAR threshold as supplied by noise power estimator 403 will be unchanged and therefore supplied unmodulated to random event and sidelobe rejection function 503.

On the other hand, at spatial locations where antenna visibility to the transmitter (satellite) is effectively reduced (e.g., owing to the presence of physical objects, such as components of a ship's superstructure), shown by the regions 602, the value of the CFAR threshold multiplier is set at a prescribed value substantially greater than unity (e.g., a value on the order of two to four). The maximum value of 'm' is constrained by the degree of uncertainty of absence of the signal of interest (here sync pulse). Setting 'm' equal to infinity equates with zero probability of reception of a sync pulse. The particular value of m selected for each n-tuple of coordinates depends on the details available concerning the obscuration environment (e.g., shadowing, complete obscuration, limited attenuation, etc.) and how detrimental a false alarm is in the particular application. The scaling multiplier m may be considered a real number over the range of unity to infinity (inclusive of the endpoints). Its range of values will depend upon the particular application.

Thus, when the antenna is pointed in a direction whose azimuth and elevation lie within the obstructed region 602, the value of the CFAR threshold, as supplied by the noise power estimator 403, will be increased by the multiplying factor m(x,y,z) to an augmented a value $m*\gamma_t$ where the value of 'm' is based upon the antenna's (az and el) pointing coordinates within modulation map 600. Namely, in an obstructed or impaired view case, the CFAR threshold scaling multiplier 'm' will cause the resultant CFAR threshold to be increased to a value that is effective to require that energy of a potential sync pulse have a value that is substantially larger than in the case of an unobstructed view to the satellite. Namely, any signal received from the direction of an obstruction (which would effectively block or obscure a true (sync) signal from the satellite, so that such a signal is not expected or highly unlikely) will encounter an increased magnitude CFAR threshold that is effective to 'mask' the signal, and thereby prevent such a (false alarm) signal from erroneously triggering a sync signal detection.

The following observations may also be noted regarding the obscuration map function m generation and maintenance. The map function spatial co-ordinates are always relative to a co-ordinate system centered (e.g., origin point) of the receiver aperture. To determine the obscuration along the line-of-sights for the receiver, the co-ordinates of, for example, a plurality physical obscurations and receiver location are known "globally" with reference to some common co-ordinate system. Then, using conventional vector algebra, the presence of an obscuration along the particular line-of-sight vector from the receiver to any possible transmitter location over the field-of-regard may be determined.

If the receiver is mobile, then knowledge of that mobility must be available at the receiver. The receiver may be readily supplied with knowledge of its own, possibly time-varying, position, e.g., by way of an associated GPS, LORAN-C, or other system capable of providing the geo-location function. The receiver has its position updated at a rate consistent with the degree of mobility; otherwise, the obscuration map would become "stale" and cease to be useful.

The primary application of this technique is for the case when the obscurations remain in fixed locations relative to the receiver aperture, however, the receiver aperture may be moving in six-degrees of freedom as well (e.g., the receiver may be mounted to a ship and the ship moves, as described above). In this case, the obscuration map function is a function of only the spatial variables.

Extending the technique to scenarios where the receiver moves independently of "globally" fixed obscurations (i.e. a cell phone in an urban environment) is straight-forward and only requires knowledge of the receiver and obscurations given in some common global co-ordinate system. Again, conventional vector algebra provides the (time-varying) obscuration map for the receiver aperture. In this case, the obscuration map function m is a function of spatial variables and time.

In addition to the receiver, if the obscuration generators are also mobile relative to the receiver, knowledge of the obscurations along the line-of-sights either exactly or statistically is required. Again, this yields a (time-varying) obscuration map for the receiver aperture (even if its position is static). Again, as described above, the obscuration map function m is a function of spatial variables and time.

In addition, if other knowledge such as the frequency selectivity of the obscurations, is available, the obscuration map data can be augmented with this data, as well. Also, any other variables under the control of the system designers or inherent in the application (e.g., wave polarization) can be used to augment the obscuration map, and provided improved utility over that of a simple line-of-sight physical (e.g., optical path) blockage.

In addition to being impacted by selective spatial effects of one or more obstructions located in its potential field of signal reception, the receiver terminal's antenna may be subjected to other signal degradation influences, such as a rain fade, which persists in an effectively ubiquitous manner for some period of time, and then dissipates. During such an event, it can be expected that the receiver terminal's antenna will be unable to see any signals (including sync pulses) being downlinked from the satellite. As a consequence, any received energy that might otherwise appear to be that of a sync pulse from the satellite is most likely a false alarm. To prevent such (false alarm) energy from being processed as a potential sync pulse, the value of the CFAR threshold multiplier 'm' is set at a value substantially greater than one (e.g., on the order of four or five), so that the resultant CFAR threshold will have a significantly elevated value that is effective to mask essentially all potential sync pulse signals, by requiring that, in order to be considered as a potential sync pulse, energy of a received signal must be considerably greater than during 'clear' weather conditions.

As will be appreciated from the foregoing description, the probability of detecting false alarms in operating conditions where signal detection is expected or known to be difficult or effectively impossible is effectively minimized in accordance with the present invention, by means of a knowledge-aided CFAR controller, that mitigates against certain types of false alarm inputs that can be effectively 'anticipated'. The CFAR controller uses knowledge of operational conditions, such as an obscuration of the transmitter, to controllably adjust, as necessary, a CFAR filter's CFAR threshold to a value that is effective to mask, as false alarms, signals that might otherwise be accepted at an unmodified (lower) CFAR threshold.

**Claims**

1. An apparatus comprising:

   a communication system receiver that is subject to relative motion with respect to a communication system transmitter and having installed therein a constant false alarm rate (CFAR) filter, and being operative to subject signals received by said receiver to CFAR filter processing; and
   a post CFAR filter signal processor, which is operative to process signals filtered by said CFAR filter in a manner that enables prescribed signals transmitted by said transmitter to be tracked, so that information contained therein may be recovered; and wherein
   said CFAR filter includes a CFAR filter controller that is operative to adjust, as necessary, a control parameter of said CFAR filter, in accordance with a priori knowledge of information that is extrinsic to said receiver and has been determined to affect the ability of said CFAR filter to exclude false alarms.

2. The apparatus according to claim 1, wherein said CFAR controller is operative to controllably modify a prescribed CFAR threshold employed by said CFAR filter to determine whether received signals may be coupled to said post CFAR filter signal processor.

3. The apparatus according to claim 2, wherein said prescribed CFAR threshold comprises a received noise power-based CFAR threshold.

4. The apparatus according to claim 2, wherein said CFAR controller is operative to multiply said prescribed CFAR threshold by a scaling multiplier, that is a function of one or more variables associated with known factors that may influence the ability of an energy collection subsystem of said receiver to receive said prescribed signals transmitted by said transmitter.

5. The apparatus according to claim 1, wherein said terminal is operative to transmit a plurality of communication signals from respectively different communication signal sources operating at respectively different data rates, over respective ones of a plurality of communication links toward said receiver, and wherein said post CFAR filter signal processor comprises a time/frequency tracker, which is operative to acquire and track time and frequency variations in synchronization signals conveyed over said communication links, so as to synchronize a receiver clock of said receiver with a clock signal embedded in a communication signal from said transmitter, by carrying out timing error and frequency error measurements on said synchronization signals conveyed over said communication links, and wherein characteristics of said time/frequency tracker are updated in accordance with data representative of said timing error and frequency error measurements, and in accordance with data representative of kinematic domain measurements carried out with respect to said receiver.

6. A method comprising the steps of:

(a) coupling signals received by a receiver of a communication system, wherein said receiver is subject to relative motion with respect to a transmitter, to a constant false alarm rate (CFAR) filter;

(b) coupling signals filtered by said CFAR filter to a post CFAR filter signal processor, which is operative to process said signals filtered by said CFAR filter in a manner that enables prescribed signals transmitted by said transmitter to be tracked, so that information contained therein may be recovered; and

(c) adjusting, as necessary, a control parameter of said CFAR filter, in accordance with a priori knowledge of information that is extrinsic to said receiver and has been determined to affect the ability of said CFAR filter to exclude false alarms.

7. The method according to claim 6, wherein step (c) comprises controllably modifying a prescribed threshold employed by said CFAR filter to determine whether received signals may be coupled to said post CFAR filter signal processor.

8. The method according to claim step 7, wherein step (c) comprises controllably setting said prescribed threshold employed by said CFAR filter at a value that is effective to mask selected received signals associated with operating conditions wherein signal detection is expected or known to be difficult or impossible, and thereby prevent said selected received signals from being coupled to said post CFAR filter signal processor.

9. The method according to claim 7, wherein step (c) comprises multiplying said prescribed threshold by a scaling multiplier, that is a function of one or more variables associated with known factors that may influence the ability of an energy collection subsystem of said receiver to receive said prescribed signals transmitted by said transmitter.

10. The method according to claim 9, wherein said scaling multiplier is a function of the signal receiving visibility to said transmitter of said energy collection subsystem of said receiver.

FIG. 1
(PRIOR ART)

EP 1 936 834 A2

"UNKNOWN"
BUT POSSIBLY AVAILABLE
FROM EPHEMERIS PROCESSOR

SHORE IS ZERO
SHIP MEASURED
SUB-M INDIRECT MEASUREMENT
SUB-P UNAVAILABLE

$$\ddot{R}'_{LOS} = \ddot{R}'_{SAT} + \ddot{R}'_{TERM}$$

ESTIMATE AVAILABLE FROM TERMINAL
FREQUENCY TRACKER

$$\frac{R'_{ERR}}{c} = \frac{v'_{ERR}}{c} = \gamma \Longleftrightarrow f_{ERR} = \gamma f_o$$

$$\frac{R'_{ERR}}{c} = \tau_{ERR}$$

X

z    Y

2

FIG. 2

FIG. 3

EP 1 936 834 A2

EP 1 936 834 A2

```
                    ┌──────────────┐
                    │    NOISE      │
                    │  ESTIMATOR    │───────────────────────────┐
                    └──────────────┘                            │
                         └─403                                  │
                                                                ▼
                                                                            ┌────409
        ┌──────────┐   ┌──────────────┐   ┌──────────┐   ┌──────────────┐   ┌──────────┐   ┌──────────┐
s(t)    │ MATCHED  │   │ NON-COHERENT │   │    A     │   │   BINARY     │   │ CLUSTER  │   │  PEAK    │
────────│  FILTER  │───│  INTEGRATOR  │───│ DETECTOR │───│ INTEGRATOR   │───│ DETECTOR │───│  SIGNAL  │
        └──────────┘   └──────────────┘   └──────────┘   │  (M OF N)    │   └──────────┘   │ DETECTOR │
             └─401          └─404             └─406       └──────────────┘      └─408       └──────────┘
                                                              └─407
        ┌──────────┐   ┌──────────────┐                                                    ┌──────────┐
        │ORTHOGONAL│   │ NON-COHERENT │                                                    │   POST   │
────────│  FILTER  │───│  INTEGRATOR  │────────────────────────────────────────────────── │PROCESSOR │───►
        └──────────┘   └──────────────┘                                        410─┐       │DETECTION │
             └─402          └─405                                                           └──────────┘
```

FIG. 4

FIG. 5

FIG. 6